# EUROPÄISCHE PATENTSCHRIFT

(11) **EP 3 000 521 B1**
(45) Veröffentlichungstag und Bekanntmachung des Hinweises auf die Patenterteilung: **15.05.2019**
(21) Anmeldenummer: 15185177.1
(22) Anmeldetag: 15.09.2015
(51) Int. Cl.: B01D 46/00, B01D 46/10, B01D 46/52, F02M 35/024

(54) **FILTERELEMENT ZUM FILTERN VON FLUID MIT EINEM GEFALTETEN FILTERMATERIAL**
A FILTER ELEMENT FOR THE FILTERING OF FLUID WITH A FOLDED FILTER MATERIAL
ÉLEMENT DE FILTRE DESTINE A FILTRER UN FLUIDE A L'AIDE D'UN MATERIAU DE FILTRE PLIE

(30) Priorität: 25.09.2014 DE 102014219403
(43) Veröffentlichungstag der Anmeldung: 30.03.2016
(73) Patentinhaber: Mahle International GmbH, 70376 Stuttgart (DE)
(72) Erfinder: BERISHA, Bashkim, 71229 Leonberg (DE); KOHLER, Samuel, 71093 Weil im Schönbuch (DE)
(74) Vertreter: BRP Renaud & Partner mbB Rechtsanwälte Patentanwälte Steuerberater

(56) Entgegenhaltungen:
- DE-A1- 19 632 618
- US-A- 2 058 669
- US-A- 3 138 443
- US-A- 4 547 950
- US-A1- 2011 252 759

## Beschreibung

Die Erfindung betrifft ein Filterelement zum Filtern von Fluid, insbesondere Luft, welches das Filterelement durchströmt, mit einem gefalteten Filtermaterial, wobei Falzkanten der Falten eine rohseitige Anströmseite des Filterelements und eine reinseitige Abströmseite des Filterelements definieren. Ferner betrifft die Erfindung einen Filter mit einem solchen Filterelement.

Derartige Filterelemente kommen dabei bevorzugt bei Frischluftanlagen von Brennkraftmaschinen zum Einsatz, um Frischluft zu reinigen, die Brennräumen der Brennkraftmaschine zugefügt werden soll. Ferner kann ein derartiges Filterelement auch bei einer Innenraumbelüftung zum Einsatz kommen, um Frischluft zu reinigen, die einem Fahrzeuginnenraum zugefügt werden soll.

Solche Filterelemente mit gefaltetem Filtermaterial weisen eine Vielzahl von Falten auf, die in einer Längsrichtung des Filterelements nebeneinander angeordnet sind. Dabei sind je zwei in der Längsrichtung des Filterelements benachbarte Falten über eine gemeinsame Falzkante miteinander verbunden. Die einzelnen Falzkanten verlaufen dabei parallel zu einer Querrichtung des Filterelements.

Solche Filterelemente aus gefaltetem Filtermaterial weisen aufgrund der Falten eine in geringe Steifigkeit gegenüber einem Durchbiegen auf. Aus diesem Grund kann eine Stabilisierung der Falten, bzw. des Filtermaterials vorgesehen werden. Aus der WO 91/19898 A1 ist beispielsweise ein an das Filtermaterial angespritzer Kamm zur Faltenstabilisierung bekannt.

Ferner ist beispielsweise aus der EP 1 843 035 B1 bekannt Strömungsrippen an dem Filterelement anzubringen, um die Strömung innerhalb des Filters zu beeinflussen. US4547950 A zeigt ein gefaltetes Filterelement mit einem Kammstabilisator.

Der vorliegenden Erfindung liegt die Aufgabe zugrunde eine verbesserte oder zumindest andere Ausführungsform eines Filterelements und/oder Filters der eingangs genannten Art bereit zu stellen, die insbesondere eine erhöhte Formstabilität, günstige Strömungseigenschaften bei reduzierten Kosten aufweist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, ein kombiniertes Element bereit zu stellen, das sowohl die Falten des Filtermaterials stabilisiert als auch die Strömung innerhalb des Filters beeinflussen kann. Auf diese Weise kann die Zahl der benötigten Teile reduziert werden, wodurch sich ein Kostenvorteil ergibt.

Im Einzelnen schlägt die Erfindung vor, dass das Filterelement mindestens ein Filtermaterialstabilisierungselement aufweist, dass das mindestens eine Filtermaterialstabilisierungselement einen Stabilisierungsabschnitt aufweist, welcher eine Kontur aufweist, die an eine Kontur des Filtermaterials angepasst ist, dass der Stabilisierungsabschnitt am Filtermaterial anliegt, um das Filtermaterial zu stabilisieren und dass das mindestens eine Filtermaterialstabilisierungselement einen Strömungsleitabschnitt aufweist, der dem Stabilisierungsabschnitt gegenüberliegt und über die rohseitige Anströmseite und/oder über die reinseitige Abströmseite des Filterelements vorsteht.

Dadurch, dass der Stabilisierungsabschnitt eine Kontur aufweist, die an die Kontur des Filtermaterials angepasst ist und der Stabilisierungsabschnitt an dem Filtermaterial anliegt wird die Beweglichkeit der einzelnen Falten des Filtermaterials zueinander eingeschränkt, wodurch sich die Stabilität des Filterelements erhöht. Insbesondere wird die Positionierung der einzelnen Falten zueinander stabilisiert. Dadurch, dass das Filtermaterialstabilisierungselement einen strömungsleistenden Abschnitt aufweist, der dem Stabilisierungsabschnitt gegenüberliegt und über die rohseitige Anströmseite oder über die reinseitige Abströmseite des Filterelements vorsteht, kann das Filtermaterialstabilisierungselement auch auf die Strömung des Fluids, welches in dem Filter gefiltert wird, Einfluss nehmen. Insbesondere kann der über die rohseitige Anströmseite und/oder über die reinseitige Abströmseite überstehende Teil frei gestaltet werden, um die Strömung des Fluids zu beeinflussen. Dadurch kann beispielsweise die Beladung des Filterelements ausgeglichen werden.

Eine günstige Lösung sieht vor, dass das mindestens eine Filtermaterialstabilisierungselement bezüglich einer Längsrichtung, die quer zu den Falten verläuft, zumindest abschnittsweise gebogen ausgebildet ist. Dadurch, dass das Filtermaterialstabilisierungselement gebogen ausgebildet ist verläuft auch der Strömungsleitabschnitt des Filtermaterialstabilisierungselementes gebogen, sodass die Strömung des Fluids besonders günstig umgelenkt werden kann. Somit kann beispielsweise die Beladung des Filterelements besonders günstig beeinflusst werden. Des Weiteren kann der durch den Filter verursachte Strömungswiderstand reduziert werden.

Besonders günstig für die Strömungsbeeinflussung des Fluids ist es, wenn im Falle von mehreren Filtermaterialstabilisierungselementen alle Filtermaterialstabilisierungselemente zumindest abschnittsweise gebogen ausgebildet sind.

Eine vorteilhafte Lösung sieht vor, dass der jeweilige Stabilisierungsabschnitt, insbesondere stoffschlüssig und/oder formschlüssig, mit dem Filtermaterial verbunden ist. Dadurch kann das Filtermaterial besonders günstig durch den Stabilisierungsabschnitt gehalten werden, da auf diese Weise sowohl Druck als auch Zugkräfte übertragen werden können. Beispielsweise ist der Stabilisierungsabschnitt mit dem Filtermaterial verklebt, angespritzt, geschweißt oder plastifiziert.

Eine weitere für die Stabilisierung des Filtermaterials vorteilhafte Lösung sieht vor, dass die Kontur des jeweiligen Stabilisierungsabschnitts dadurch an die Kontur des Filtermaterials angepasst ist, dass der Stabilisierungsabschnitt Ausnehmungen aufweist, in welche die Falten des Filtermaterials greifen können.

Besonders vorteilhaft ist es, wenn die Kontur des jeweiligen Stabilisierungsabschnittes kammartig ausgebildet ist mit vorstehenden Zinken, die in Taschen zwischen benachbarten Falten eingreifen, während die Falten mit den Falzkanten voraus in die Ausnehmungen zwischen den Zinken eingreifen.

Eine weitere für die Stabilisierung des Filtermaterials vorteilhafte Lösung sieht vor, dass der jeweilige Stabilisierungsabschnitt eine Anlagekante aufweist, deren Verlauf dem Verlauf der Falten des Filtermaterials relativ zum Stabilisierungsabschnitt entspricht.

Besonders günstig ist es dabei, dass der jeweilige Stabilisierungsabschnitt an der Anlagekante stoffschlüssig mit dem Filtermaterial verbunden ist. So kann die Form, insbesondere die Falten des Filtermaterials, besonders günstig stabilisiert werden.

Besonders vorteilhaft ist es, dass zumindest der jeweilige Strömungsleitabschnitt wandförmig ausgebildet ist. Wandförmig heißt, dass eine Wandstärke geringer ist als die Ausdehnung in die zwei anderen Raumrichtungen. Vorzugsweise ist die Ausdehnung in den anderen Raumrichtungen mehr als 5 mal so groß wie die Wandstärke, noch bevorzugter mehr als 10 mal und am bevorzugsten mehr als 20 mal so groß wie die Wandstärke. Durch die wandförmige Struktur des Strömungsleitabschnitts weist dieser eine Richtung mit einem hohen Strömungswiderstand auf und eine Richtung mit einem geringen Widerstand, sodass die Strömung des Fluids gezielt beeinflusst, insbesondere gelenkt werden kann.

Besonders vorteilhaft ist es, wenn der jeweilige Strömungsleitabschnitt eine größte Höhe aufweist, die mindestens 25 %, vorzugsweise mindestens 50 %, noch bevorzugter mindestens 75 % und am bevorzugsten mindestens 100 %, eines Abstandes zwischen der rohseitigen Anströmseite des Filterelements und der reinseitigen Abströmseite des Filterelements entspricht. Durch die ausreichende Höhe des Strömungsleitabschnitts weist dieser eine ausreichend große Fläche zur Beeinflussung der Strömung des Fluids auf.

Für die Beeinflussung der Strömung des Fluids ist es besonders günstig, wenn der jeweilige Strömungsleitabschnitt eine in Längsrichtung, welche quer zu den Falten verläuft, variierende Höhe aufweist. Durch die Variation der Höhe des Strömungsleitabschnitts kann die Wirkung des Strömungsleitabschnitts auf die Strömung des Fluids noch gezielter angepasst werden.

Eine für die Herstellung besonders vorteilhafte Möglichkeit sieht vor, dass das mindestens eine Filtermaterialstabilisierungselement aus Flachmaterial gebildet ist. Alternativ oder ergänzend hierzu kann vorgesehen sein, dass das mindestens eine Filtermaterialstabilisierungselement als Flachmaterial ausgebildet ist, beispielsweise durch Kunststoffspritzguss.

Ferner sieht eine weitere besonders vorteilhafte Möglichkeit vor, dass das Filtermaterial mindestens zwei solche Filtermaterialstabilisierungselemente aufweist, dass der Strömungsleitabschnitt mindestens eines der Filtermaterialstabilisierungselemente über die reinseitige Abstömseite des Filterelements vorsteht und dass der Strömungsleitabschnitt mindestens eines weiteren der Filtermaterialstabilisierungselemente über die rohseitige Anströmseite des Filterelements vorsteht. Auf diese Weise kann die Strömung des Fluids sowohl reinseitig als auch rohseitig des Filters beeinflusst werden, sodass besonders günstig Einfluss sowohl auf die Beladung des Filterelements, als auch auf den Gesamtströmungswiderstand des Filters Einfluss genommen werden kann.

Ferner sieht eine günstige Variante vor, dass die Filtermaterialstabilisierungselemente jeweils ausschließlich entweder über die reinseitige Abströmseite oder über die rohseitige Anströmseite vorstehen. Dadurch können die reinseitigen und rohseitigen Strömungsleitabschnitte der Filtermaterialstabilisierungselemente unabhängig voneinander ausgebildet werden, sodass die rohseitige und die reinseitige Strömung des Fluids unabhängig voneinander beeinflusst werden können.

Ferner wird die oben genannte Aufgabe durch einen Filter mit einem Filterelement gemäß der vorstehenden Beschreibung gelöst, wobei der Filter ein Gehäuse umfasst, das einen rohseitigen Teil und einen reinseitigen Teil aufweist, wobei eine Einströmöffnung in dem rohseitigen Teil des Gehäuses angeordnet ist, durch welche ungefiltertes Fluid in das Gehäuse einströmen kann, und wobei eine Ausströmöffnung in dem reinseitigen Teil des Gehäuses angeordnet ist, durch welchen gefiltertes Fluid aus dem Gehäuse ausströmen kann. Dadurch übertragen sich die Vorteile des Filterelements auf den Filter, auf deren vorstehende Beschreibung insoweit Bezug genommen wird.

Eine vorteilhafte Variante sieht vor, dass die Einströmöffnung und die Ausströmöffnung quer zueinander angeordnet sind, sodass das durch den Filter strömende Fluid umgelenkt werden muss, und dass das durch den Filter strömende Fluid zumindest teilweise durch den Strömungsleitabschnitt des mindestens einen Filtermaterialstabilisierungselements umgelenkt wird. Durch die Anordnung der Einströmöffnung und der Ausströmöffnung quer zueinander kann auf die beim jeweiligen Einsatzzweck gegebenen Anforderungen, insbesondere bezüglich des Bauraums und der Einbaulage, Rücksicht genommen werden. Gerade bei einem solchen Fall ist die kombinierte stabilisierende und strömungsleitende Wirkung des Filtermaterialstabilisierungselements besonders von Vorteil.

Eine besonders günstige Lösung sieht vor, dass der Filter ein Luftfilter, insbesondere ein Luftfilter für eine Brennkraftmaschine, beispielsweise eines Kraftfahrzeugs ist. In modernen Kraftfahrzeugen ist der Bauraum innerhalb des Motorraums besonders begrenzt, sodass die Vorteile der erfindungsgemäßen Lösung besonders gut zum tragen kommen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine perspektivische Teilschnittdarstellung eines erfindungsgemäßen Filters von schräg oben,
- Fig. 2: eine perspektivische Teilschnittdarstellung des Filters aus Fig. 1 von schräg unten,
- Fig. 3: eine perspektivische Darstellung eines erfindungsgemäßen Filterelements von schräg oben,
- Fig. 4: eine perspektivische Darstellung des Filterelements aus Fig. 3 von schräg unten,
- Fig. 5: eine Seitenansicht eines beispielhaften Filtermaterialstabilisierungselements,
- Fig. 6: eine Seitenansicht eines weiteren Beispiels eines Filtermaterialstabilisierungselements,
- Fig. 7: eine Seitenansicht eines weiteren Beispiels eines gebogenen Filtermaterialstabilisierungselements, wobei aus Gründen der Anschaulichkeit, das Filtermaterialstabilisierungselement in einem nicht gebogenen Zustand dargestellt ist.

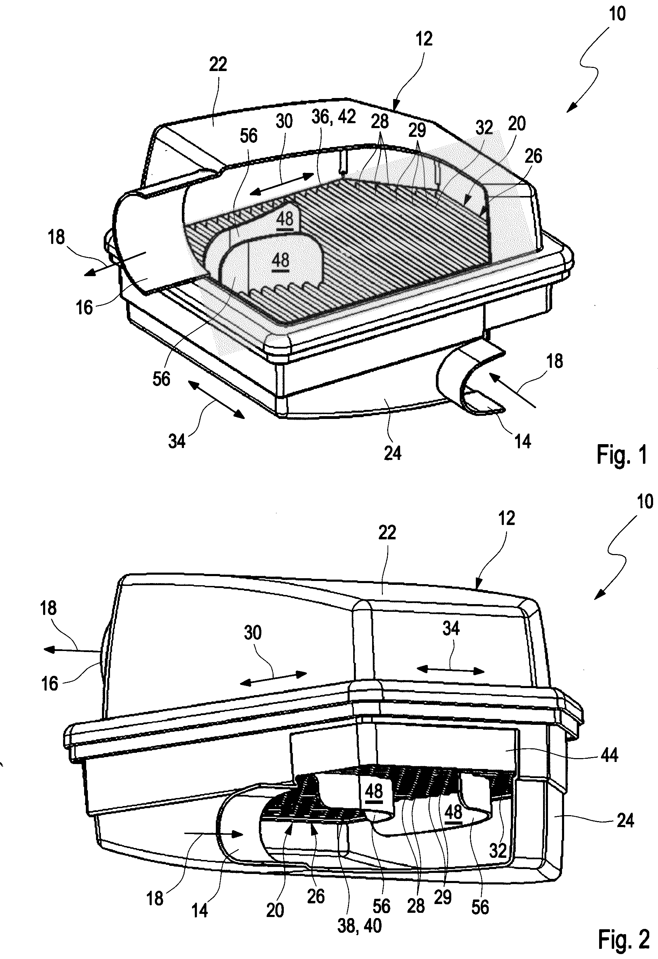

Ein in den Figuren 1 und 2 dargestellter Filter 10 wird beispielsweise für eine Frischluftanlage von Brennkraftmaschinen, insbesondere Kraftfahrzeugen verwendet. Der Filter 10 weist ein Gehäuse 12 mit einer Einströmöffnung 14 und einer Ausströmöffnung 16 auf. Durch die Einströmöffnung 14 kann Fluid 18, insbesondere Luft in den Filter 10 einströmen. In dem Gehäuse 12 des Filters 10 kann das Fluid 18 ein Filterelement 20 durchströmen und dadurch gefiltert werden. Von dem Filterelement 20 aus kann das gefilterte Fluid 18 durch die Ausströmöffnung 16 wieder austreten.

Das Gehäuse 12 des Filters 10 ist mehrteilig, beispielsweise zweiteilig, ausgebildet. Das Gehäuse 12 weist einen reinseitigen Teil 22 und einen rohseitigen Teil 24 auf, welche lösbar miteinander verbunden sind und strömungstechnisch durch das Filterelement 20 voneinander getrennt sind. Dadurch kann das Gehäuse 12 geöffnet werden, um beispielsweise das Filterelement 20 einzulegen oder auszuwechseln.

Das Filterelement 20 ist beispielsweise als ein Plattenfilterelement ausgebildet. Das Filterelement 20 weist ein Filtermaterial 26 auf, welches gefaltet ist. Durch das Falten des Filtermaterials 26 kann auf kleinerem Bauraum eine größere Filterfläche untergebracht werden, wodurch sich der Strömungswiderstand durch das Filterelement 20 verringern lässt.

Das Filterelement 20 weist beispielsweise eine rechtwinklige Grundfläche auf, wobei eine der rechtwinkligen Ecken abgeschnitten ist und durch zwei nicht rechtwinklige Ecken ersetzt ist. Dies kann beispielsweise erforderlich sein, um das Filterelement 20 und den Filter 10 an den gegebenen zur Verfügung stehenden Bauraum, beispielsweise in dem Motorraum eines Kraftfahrzeugs, anzupassen.

Das Filtermaterial 26 weist mehrere Falten 28 auf, welche in einer Längsrichtung 30 des Filterelements 20 nebeneinander angeordnet sind. Die einzelnen Falten 28 sind dabei durch eine Falzkante 32 verbunden, welche parallel zu einer Querrichtung 34 des Filterelements verlaufen.

Das Filtermaterial 26 ist zickzack-förmig gefaltet, sodass sich die Knickrichtung des Filtermaterials 26 von Falzkante 32 zu Falzkante 32 abwechselt. Auf diese Weise wird das im Wesentlichen Quaderförmige Filterelement 20 gebildet, wobei die Falzkanten 32 zweireihig nebeneinander angeordnet sind. Eine obere Reihe der Falzkanten 32 bildet eine Oberseite 36 des Filterelements 20 und eine untere Reihe der Falzkanten 32 bildet eine Unterseite 38 des Filterelements 20. Ferner sind zwischen den Falten 28 des Filtermaterials 26 Taschen 29 gebildet.

Bei der hier beispielhaften Einbaulage des Filterelements 20 in dem Filter 10 bildet die Unterseite 38 eine rohseitige Anströmseite 40 des Filterelements 20, da die Unterseite 38 der Einströmöffnung 14 zugewandt ist. Die Oberseite 36 des Filterelements 20 ist der Ausströmöffnung 16 zugewandt, sodass die Oberseite 36 eine reinseitige Abströmseite 42 des Filterelements 20 bildet.

Des Weiteren weist das Filterelement 20 einen Rahmen 44 auf, welcher das Filtermaterial 26 umgibt, wobei die reinseitige Abstromseite 42 und die rohseitige Anströmseite 40 nicht von dem Rahmen 44 abgedeckt sind. Der Rahmen 44 kann beispielsweise aus Kunststoff gebildet sein und stoffschlüssig mit dem Filtermaterial 26 verbunden sein, insbesondere durch kleben, anspritzen oder plastifizieren.

An einem Rand des Rahmens 44, welcher angrenzend zu der reinseitigen Abstömseite 42 des Filterelements 20 liegt, weist das Filterelement 20 eine Dichtung 46 auf, mit welcher das Filterelement gegenüber dem Gehäuse 12 abgedichtet ist, sodass Fluid 18 welches das Gehäuse 12 des Filters 10 durchströmt durch das Filtermaterial 26 des Filterelements 20 strömen muss.

Durch die Falten 28 im Filtermaterial 26 des Filterelements 20 weist das Filtermaterial 26 eine geringe Stabilität gegenüber einem Durchbiegen auf, insbesondere um eine Achse entlang der Falzkanten 32. Des Weiteren können die Falten 28 gegeneinander verkippen, sodass diese teilweise aneinander liegen, wodurch die Durchströmung des Filtermaterials 26 von Falte 28 zu Falte 28 variieren kann, was wiederum eine ungleiche Belastung des Filtermaterials 26 zur Folge hätte. Aus diesem Grund ist eine Stabilisierung des Filtermaterials 26, insbesondere der Falten 28 des Filtermaterials 26 vorgesehen.

Das Filterelement 20 weist einen Filtermaterialstabilisierungselement 48 auf, welches insbesondere aus Flachmaterial gefertigt ist oder entsprechend aus Kunststoff gespritzt ist.

Das Filtermaterialstabilisierungselement 48 weist einen Stabilisierungsabschnitt 50 auf, welcher an dem Filtermaterial 26 anliegt, um das Filtermaterial 26, insbesondere die Falten 28, zu stabilisieren. Dazu weist der Stabilisierungsabschnitt 50 eine Kontur 51 auf, die an eine Kontur 53 des Filtermaterials 26 angepasst ist. Der Stabilisierungsabschnitt 50 weist Ausnehmungen 52 auf, welche an die Falten 28 angepasst sind, sodass die Falten 28 in die Ausnehmung 52 des Stabilisierungsabschnitts 50 greifen können. Durch die Ausnehmungen 52 ist eine Anlagekante 54 an dem Stabilisierungsabschnitt 50 gebildet, welche dem Verlauf des Filtermaterials 26 an der Oberseite 36 oder der Unterseite 38 entspricht, je nachdem an welcher Seite das Filtermaterialstabilisierungselement 48 angeordnet sein soll.

Dadurch ist die Kontur 51 des Stabilisierungsabschnitts 50 kammartig ausgebildet. Der Stabilisierungsabschnitt 50 weist vorstehende Zinken 55 auf, welche sich in Längsrichtung 30 des Filterelements 20 mit den Ausnehmungen 52 abwechseln. Die vorstehenden Zinken 55 können in die Taschen 29 zwischen den Falten 28 greifen. Die Falten 28 greifen entsprechend mit den Falzkanten 32 voraus in die Ausnehmungen 52 zwischen den Zinken 55.

Wird der Stabilisierungsabschnitt 50 des Filtermaterialstabilisierungselements 48 an das Filtermaterial 26 angelegt, werden somit die Falten 28 des Filtermaterials 26 durch die Ausnehmung 52 und die Zinken 55 des Stabilisierungsabschnitts 50 fixiert, sodass ein Durchbiegen des Filtermaterials 26 oder ein Verkippen der Falten 28 zueinander gehemmt wird.

Eine verbesserte Stabilisierungswirkung kann erzielt werden, wenn der Stabilisierungsabschnitt 50 mit dem Filtermaterial 26 verbunden wird. Dies kann beispielsweise durch Stoffschluss, insbesondere kleben, anspritzen oder plastifizieren erfolgen.

Der Stabilisierungsabschnitt 50 des Filtermaterialstabilisierungselements 48 erstreckt sich bevorzugt in Längsrichtung 30 des Filterelements 20, da auf diese Weise bezogen auf den Materialeinsatz für das Filtermaterialstabilisierungselement 48, die meisten Falten 28 von dem Stabilisierungsabschnitt 50 gefasst werden können.

Mit fortschreitender Technischer Entwicklung, insbesondere von Kraftfahrzeugen, muss der zur Verfügung stehende Bauraum möglichst effektiv ausgenutzt werden, da immer mehr Vorrichtungen auf dem selben Raum untergebracht werden müssen. Aus diesem Grund muss der Filter 10 an den dem Filter 10 zur Verfügung stehenden Bauraum angepasst werden, wodurch es unerlässlich sein kann, dass beispielsweise die Eintrittsöffnung 14 quer zu der Austrittsöffnung 16 angeordnet ist. In einem solchen Fall ist die Strömung des Fluids 18 ungünstig, sodass die Beladung des Filterelements 20 ungleichmäßig wäre. Dies würde dazu führen, dass das Filterelement 20 früher ausgewechselt werden müsste. Dadurch entstünden höhere Wartungskosten.

Aus diesem Grund sind an den Filtermaterialstabilisierungselementen 48 Strömungsleitabschnitte 56 vorgesehen, die integral mit dem Stabilisierungsabschnitten 50 ausgebildet sind. Die Strömungsleitabschnitte 56 sind an einer gegenüberliegenden Seite der Stabilisierungsabschnitte 50 angeordnet und stehen somit über die reinseitige Abstromseite 42 bzw. die rohseitige Anstromseite 40 vor.

Dadurch, dass die Strömungsleitabschnitte 56 aus dem Filtermaterial 26 vorstehen, ragen diese in ein Volumen des Gehäuses 12 des Filters 10, wodurch diese die Strömung des Fluids 18 beeinflussen können.

Die Strömungsleitabschnitte 56 weisen eine Höhe 58 auf, welche definiert ist als der Abstand einer Oberkante 60 des Filtermaterialstabilisierungselements 48 zu den Ausnehmungen 52 des Stabilisierungsabschnitts 50. Somit steht der Strömungsleitabschnitt 56 mit der Höhe 58 über die reinseitige Abströmseite 42 bzw. rohseitige Anströmseite 40 über.

Zur gezielten Beeinflussung der Strömung des Fluids 18 kann der Strömungsleitabschnitt 56 eine über die Länge des Strömungsleitabschnitts 56 variierende Höhe 58 aufweisen. So kann beispielsweise in einem Bereich, in dem die Strömung des Fluids 18 weniger stark beeinflusst werden soll, der Strömungsleitabschnitt 56 eine geringe Höhe 58 aufweisen, während in einem Bereich, in dem die Strömung des Fluids 18 stärker beeinflusst werden soll, der Strömungsleitabschnitt 56 eine größere Höhe 58 aufweisen kann.

Eine größte Höhe 59 des Strömungsleitabschnitts 56 ist definiert als die Höhe 58 an der Stelle des Filtermaterialstabilisierungselements 48, an der die Höhe 58 am größten ist. Für die Beeinflussung der Strömung des Fluids 18 ist es vorteilhaft, wenn die größte Höhe 59 des Strömungsleitabschnitts 56 mindestens 25 %, vorzugsweise mindestens 50 %, noch bevorzugter mindestens 75 % und am bevorzugsten mindestens 100 %, eines Abstandes zwischen der rohseitigen Anströmseite 40 des Filterelements 20 und der reinseitigen Abströmseite 42 des Filterelements 20 entspricht, also einer Dicke 61 des Filtermaterials 26.

Des Weiteren kann beispielsweise für die Umlenkung der Strömung des Fluids 18 vorgesehen sein, dass das Filtermaterialstabilisierungselement 48 schräg zu der Längsrichtung 30 des Filterelements 20 angeordnet ist, sodass mit Hilfe des Strömungsleitabschnitts 56 das Fluid 18 gezielt gelenkt werden kann.

Wenn das Filtermaterialstabilisierungselement 48 schräg zu der Längsrichtung 30 verläuft, verläuft es auch schräg zu den Falzkanten 32 und den Falten 28, sodass die Ausnehmungen 52 entsprechend angepasst werden müssen. Bei einem von 90°Grad abweichenden Winkel des Stabilisierungsabschnitts 50 zu den Falzkanten 32 verringert sich die Anzahl der Falten 28, welche bei gleicher Länge durch den Stabilisierungsabschnitt 50 gehalten werden können. Folglich müssen bei einem von 90°Grad abweichenden Winkel, insbesondere bei einem flacheren Winkel die Ausnehmungen 52 gestreckt werden.

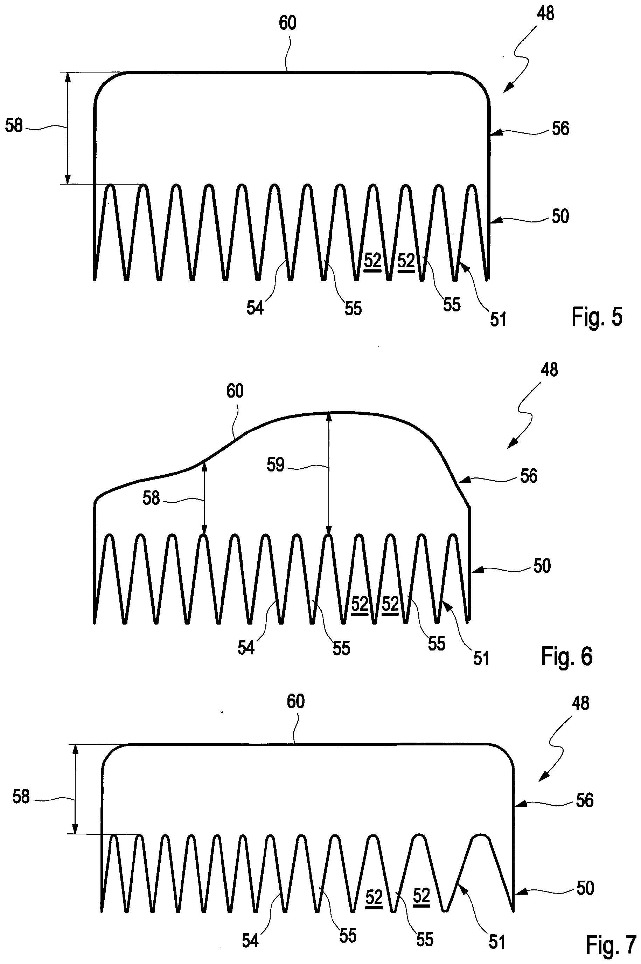

Besonders bevorzugt ist es, wenn das Filtermaterialstabilisierungselement 48 gebogen ausgebildet ist. Dadurch kann ein gebogener Strömungsleitabschnitt 56 erzielt werden, wodurch besonders günstig die Strömung des Fluids 18 umgelenkt werden kann. In einem solchen Fall müssen ebenfalls die Ausnehmungen 52 des Stabilisierungsabschnitts 50 angepasst werden, wie es beispielsweise in Figur 7 dargestellt ist.

Um die Strömung des Fluids 18 besonders günstig beeinflussen zu können, sind mehrere, beispielsweise vier, Filtermaterialstabilisierungselement 48 vorgesehen. Die Filtermaterialstabilisierungselemente 48 können dabei auf beiden Seiten des Filterelements also an der reinseitigen Abströmseite 42 und an der rohseitigen Anströmseite 40 angeordnet sein. Jedes Filtermaterialstabilisierungselement 48 ist jeweils nur an einer der beiden Seiten angeordnet.

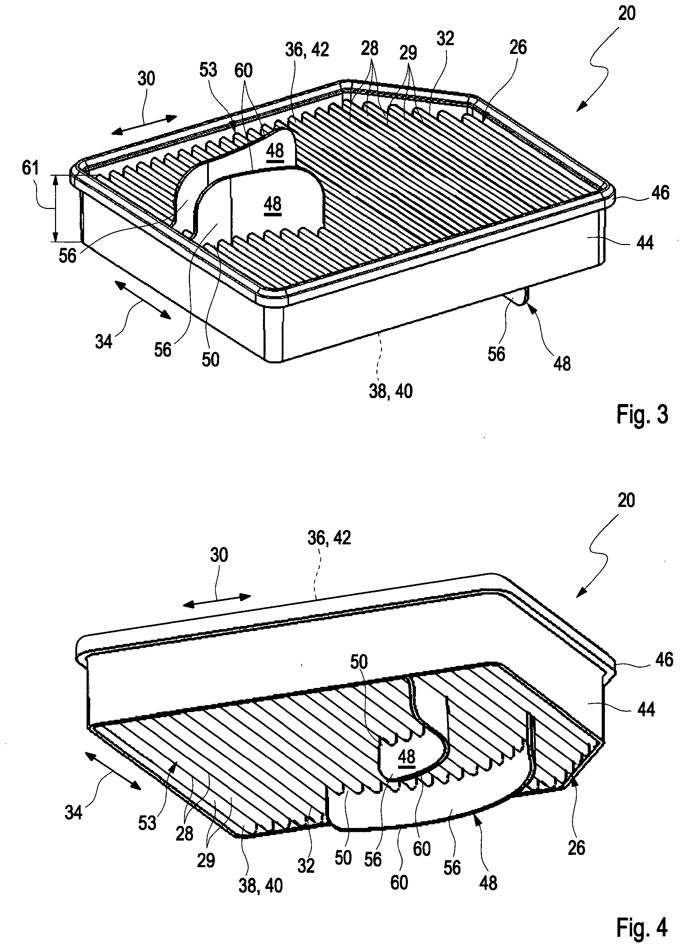

So weist beispielsweise das in den Figuren 3 und 4 dargestellte Filterelement zwei Filtermaterialstabilisierungselement 48 auf, welche an der reinseitigen Abstömseite 42 des Filterelements angeordnet sind und zwei Filtermaterialstabilisierungselemente 48 auf, welche an der rohseitigen Anströmseite 40 des Filterelements 20 angeordnet sind.

Auf diese Weise können die Strömungen des Fluids 18 in dem rohseitigen Teil 24 des Gehäuses 12 unabhängig von den Strömungen des Fluids 18 in dem reinseitigen Teil 22 des Gehäuses 12 beeinflusst werden.

Die einzelnen Filtermaterialstabilisierungselemente 48 erstrecken sich zwar nicht über die gesamte Länge des Filterelements 20. Allerdings sind die Filtermaterialstabilisierungselemente 48 derart auf dem Filtermaterial 26 des Filterelements 20 angeordnet, dass die meisten Falten 28 von einem Stabilisierungsabschnitt 50 stabilisiert sind.

Ein besonderer Vorteil der erfindungsgemäßen Lösung ist die Kombination der Faltenstabilisierung mit der Strömungsleitung mittels eines einzigen Bauteils, sodass die Herstellungskosten reduziert sind.

## Patentansprüche

1. Filterelement zum Filtern von Fluid (18), insbesondere Luft, welches das Filterelement (20) durchströmt, mit einem gefalteten Filtermaterial (26), wobei Falzkanten (32) der Falten (28) eine rohseitige Anströmseite (40) des Filterelements (20) und eine reinseitige Abströmseite (42) des Filterelements (42) definieren,
- wobei das Filterelement (20) mindestens ein Filtermaterialstabilisierungselement (48) aufweist,
- wobei das mindestens eine Filtermaterialstabilisierungselement (48) einen Stabilisierungsabschnitt (50) aufweist, welcher eine Kontur (51) aufweist, die an eine Kontur (53) des Filtermaterials (26) angepasst ist,
- wobei der Stabilisierungsabschnitt (50) am Filtermaterial (26) anliegt, um das Filtermaterial (26) zu stabilisieren, und
- wobei das mindestens eine Filtermaterialstabilisierungselement (48) einen Strömungsleitabschnitt (56) aufweist, der dem Stabilisierungsabschnitt (50) gegenüberliegt und über die rohseitige Anströmseite (40) und/oder über die reinseitigen Abströmseite (42) des Filterelements (20) vorsteht
**dadurch gekennzeichnet,**
**dass** das mindestens eine Filtermaterialstabilisierungselement (48) bezüglich einer Längsrichtung (30), die quer zu den Falten (28) verläuft, zumindest abschnittsweise gebogen ausgebildet ist.

2. Filterelement nach Anspruch 1,
**dadurch gekennzeichnet,**
**dass** der jeweilige Stabilisierungsabschnitt (50), insbesondere stoffschlüssig und/oder formschlüssig, mit dem Filtermaterial (26) verbunden ist.

3. Filterelement nach Anspruch 1 oder 2,
**dadurch gekennzeichnet,**
**dass** die Kontur (51) des jeweiligen Stabilisierungsabschnittes (50) dadurch an die Kontur (53) des Filtermaterials (26) angepasst ist, dass der Stabilisierungsabschnitt (50) Ausnehmungen (52) aufweist, in welche die Falten (28) des Filtermaterials (26) greifen können.

4. Filterelement nach einem der Ansprüche 1 bis 3,
**dadurch gekennzeichnet,**
**dass** die Kontur (51) des jeweiligen Stabilisierungsabschnittes (50) kammartig ausgebildet ist mit vorstehenden Zinken, die in Taschen zwischen benachbarten Falten (28) eingreifen, während die Falten (28) mit den Falzkanten (32) voraus in die Ausnehmungen (52) zwischen den Zinken eingreifen.

5. Filterelement nach einem der Ansprüche 1 bis 4,
**dadurch gekennzeichnet,**
**dass** zumindest der jeweilige Strömungsleitabschnitt (56) wandförmig ausgebildet ist.

6. Filterelement nach einem der Ansprüche 1 bis 5,
**dadurch gekennzeichnet,**
**dass** der jeweilige Strömungsleitabschnitt (56) eine größte Höhe (59) aufweist, die mindestens 25%, vorzugsweise mindestens 50%, noch bevorzugter mindestens 75% und am bevorzugsten mindestens 100%, eines Abstandes zwischen der rohseitigen Anströmseite (40) des Filterelements (20) und der reinseitigen Abströmseite (42) des Filterelements (20) entspricht.

7. Filterelement nach einem der Ansprüche 1 bis 6,
**dadurch gekennzeichnet,**
**dass** der jeweilige Strömungsleitabschnitt (56) eine in Längsrichtung (30), welche quer zu den Falten (28) verläuft, variierende Höhe (58) aufweist.

8. Filterelement nach einem der Ansprüche 1 bis 7,
**dadurch gekennzeichnet,**
**dass** das mindestens eine Filtermaterialstabilisierungselement (48) aus Flachmaterial gebildet ist und/oder als Flachmaterial ausgebildet ist.

9. Filterelement nach einem der Ansprüche 1 bis 8,
**dadurch gekennzeichnet,**
- **dass** das Filterelement (20) mindestens zwei solche Filtermaterialstabilisierungselemente (48) aufweist, dass
- der Strömungsleitabschnitt (56) mindestens eines der Filtermaterialstabilisierungselemente (48) über die reinseitige Abströmseite (42) des Filterelements (20) vorsteht und dass
- der Strömungsleitabschnitt (56) mindestens eines weiteren der Filtermaterialstabilisierungselemente (48) über die rohseitige Anströmseite (40) des Filterelements (20) vorsteht.

10. Filterelement nach Anspruch 9,
**dadurch gekennzeichnet,**
**dass** die Filtermaterialstabilisierungselemente (48) jeweils ausschließlich entweder über die reinseitige Abströmseite (42) oder über die rohseitige Anströmseite (40) vorstehen.

11. Filter mit einem Filterelement (20) nach einem der Ansprüche 1 bis 10,
**dadurch gekennzeichnet,**
- **dass** der Filter (10) ein Gehäuse (12) umfasst, das einen rohseitigen Teil (24) und einen reinseitigen Teil (22) aufweist,
- **dass** eine Einströmöffnung (14) in dem rohseitigen Teil (24) des Gehäuses (12) angeordnet ist, durch welche ungefiltertes Fluid (18) in das Gehäuse (12) einströmen kann, und
- **dass** eine Ausströmöffnung (16) in dem reinseitigen Teil (22) des Gehäuses (12) angeordnet ist, durch welchen gefiltertes Fluid (18) aus dem Gehäuse (12) ausströmen kann.

12. Filter nach Anspruch 11,
**dadurch gekennzeichnet,**
- **dass** die Einströmöffnung (14) und die Ausströmöffnung (16) quer zueinander angeordnet sind,
- **dass** das durch den Filter (10) strömende Fluid (18) zumindest teilweise durch den Strömungsleitabschnitt (56) des mindestens einen Filtermaterialstabilisierungselements (48) umgelenkt wird.

13. Filter nach Anspruch 11 oder 12,
**dadurch gekennzeichnet,**
**dass** der Filter (10) ein Luftfilter, insbesondere ein Luftfilter für eine Brennkraftmaschine, beispielsweise eines Kraftfahrzeug ist.

## Claims

1. A filter element for the filtering of fluid (18), in particular air, which flows through the filter element (20), with a folded filter material (26), wherein fold edges (32) of the folds (28) define an inflow side (40) of the filter element (20) on the raw side and an outflow side (42) of the filter element (42) on the clean side,
- wherein the filter element (20) has at least one filter material stabilizing element (48),
- wherein the at least one filter material stabilizing element (48) has a stabilizing section (50), which has a contour (51) which is adapted to a contour (53) of the filter material (26),
- wherein the stabilizing section (50) lies against the filter material (26), in order to stabilize the filter material (26), and
- wherein the at least one filter material stabilizing element (48) has a flow-directing section (56), which lies opposite the stabilizing section (50) and projects over the inflow side (40) on the raw side and/or over the outflow side (42) of the filter element (20) on the clean side,
**characterized in that**
the at least one filter material stabilizing element (48) is constructed at least in sections in a bent manner with respect to a longitudinal direction (30) which runs transversely to the folds (28).

2. The filter element according to Claim 1,
**characterized in that**
the respective stabilizing section (50) is connected with the filter material (26) in particular in a materially bonded and/or form-fitting manner.

3. The filter element according to Claim 1 or 2,
**characterized in that**
the contour (51) of the respective stabilizing section (50) is adapted to the contour (53) of the filter material (26) **in that** the stabilizing section (50) has recesses (52), into which the folds (28) of the filter material (26) can engage.

4. The filter element according to one of Claims 1 to 3,
**characterized in that**
the contour (51) of the respective stabilizing section (50) is constructed in a comblike manner with projecting prongs which engage in pockets between adjacent folds (28), whilst the folds (28) with the fold edges (32) ahead engage into the recesses (52) between the prongs.

5. The filter element according to one of Claims 1 to 4,
**characterized in that**
at least the respective flow-directing section (56) is constructed so as to be wall-shaped.

6. The filter element according to one of Claims 1 to 5,
**characterized in that**
the respective flow-directing section (56) has a maximum height (59), which corresponds to at least 25%, preferably at least 50%, more preferably at least 75% and most preferably at least 100% of a distance between the inflow side (40) of the filter element (20) on the raw side and the outflow side (42) of the filter element (20) on the clean side.

7. The filter element according to one of Claims 1 to 6,
**characterized in that**
the respective flow-directing section (56) has a height (58) varying in longitudinal direction (30), which runs transversely to the folds (28).

8. The filter element according to one of Claims 1 to 7,
**characterized in that**
the at least one filter material stabilizing element (48) is formed from flat material and/or is constructed as flat material.

9. The filter element according to one of Claims 1 to 8,
**characterized in that**
- the filter element (20) has at least two such filter material stabilizing elements (48), that
- the flow-directing section (56) at least one of one the filter material stabilizing elements (48) projects over the outflow side (42) of the filter element (20) on the clean side and that
- the flow-directing section (56) at least of a further one of the filter material stabilizing elements (48) projects over the inflow side (40) of the filter element (20) on the raw side.

10. The filter element according to Claim 9,
**characterized in that**
the filter material stabilizing elements (48) project respectively exclusively either over the outflow side (42) on the clean side or over the inflow side (40) on the raw side.

11. A filter with a filter element (20) according to one of Claims 1 to 10,
**characterized in that**
- the filter (10) comprises a housing (12) which has a part (24) on the raw side and a part (22) on the clean side,
- an inflow opening (14) is arranged in the part (24) of the housing (12) on the raw side, through which unfiltered fluid (18) can flow into the housing (12), and
- an outflow opening (16) is arranged in the part (22) of the housing (12) on the clean side, through which filtered fluid (18) can flow out from the housing (12).

12. The filter according to Claim 11,
**characterized in that**
- the inflow opening (14) and the outflow opening (16) are arranged transversely to one another,
- the fluid (18) flowing through the filter (10) is deflected at least partially through the flow-directing section (56) of the at least one filter material stabilizing element (48).

13. The filter according to Claim 11 or 12,
**characterized in that**
the filter (10) is an air filter, in particular an air filter for an internal combustion engine, for example of a motor vehicle.

## Revendications

1. Élément de filtre pour filtrer un fluide (18), en particulier de l'air, lequel traverse l'élément de filtre (20), avec un matériau de filtration plié (26), dans lequel des arêtes de pliage (32) des plis (28) définissent un côté entrée côté brut (40) de l'élément de filtre (20) et un côté sortie côté pur (42) de l'élément de filtre (42),
- dans lequel l'élément de filtre (20) présente au moins un élément de stabilisation de matériau de filtration (48),
- dans lequel l'au moins un élément de stabilisation de matériau de filtration (48) présente une section de stabilisation (50), laquelle présente un contour (51), qui est adapté à un contour (53) du matériau de filtration (26),
- dans lequel la section de stabilisation (50) s'applique sur le matériau de filtration (26) pour stabiliser le matériau de filtration (26), et
- dans lequel l'au moins un élément de stabilisation de matériau de filtration (48) présente une section de conduite d'écoulement (56), qui fait face à la section de stabilisation (50) et fait saillie du côté entrée côté brut (40) et/ou du côté sortie côté pur (42) de l'élément de filtre (20)
**caractérisé en ce**
**que** l'au moins un élément de stabilisation de matériau de filtration (48) est réalisé plié au moins par section par rapport à une direction longitudinale (30), qui s'étend transversalement aux plis (28).

2. Élément de filtre selon la revendication 1,
**caractérisé en ce**
**que** la section de stabilisation (50) respective est reliée au matériau de filtration (26), en particulier par matière et/ou par correspondance de forme.

3. Élément de filtre selon la revendication 1 ou 2,
**caractérisé en ce**
**que** le contour (51) de la section de stabilisation (50) respective est adapté au contour (53) du matériau de filtration (26) par le fait que la section de stabilisation (50) présente des évidements (52), dans lesquels les plis (28) du matériau de filtration (26) peuvent venir en prise.

4. Élément de filtre selon l'une quelconque des revendications 1 à 3,
**caractérisé en ce**
**que** le contour (51) de la section de stabilisation (50) respective est réalisé en forme de peigne avec des dents en saillie, qui viennent en prise dans des poches entre des plis adjacents (28), pendant que les plis (28) viennent en prise avec les arêtes de pliage (32) en avant dans les évidements (52) entre les dents.

5. Élément de filtre selon l'une quelconque des revendications 1 à 4,
**caractérisé en ce**
**qu'**au moins la section de conduite d'écoulement (56) respective est réalisée en forme de paroi.

6. Élément de filtre selon l'une quelconque des revendications 1 à 5,
**caractérisé en ce**
**que** la section de conduite d'écoulement (56) respective présente une plus grande hauteur (59), qui correspondant à au moins 25 %, de préférence au moins 50 %, plus de préférence au moins 75 % et de manière la plus préférée au moins 100 %, d'une distance entre le côté entrée côté brut (40) de l'élément de filtre (20) et le côté sortie côté pur (42) de l'élément de filtre (20).

7. Élément de filtre selon l'une quelconque des revendications 1 à 6,
**caractérisé en ce**
**que** la section de conduite d'écoulement (56) respective présente une hauteur (58) variable dans la direction longitudinale (30), laquelle s'étend perpendiculairement aux plis (28).

8. Élément de filtre selon l'une quelconque des revendications 1 à 7,
**caractérisé en ce**
**que** l'au moins un élément de stabilisation de matériau de filtration (48) est formé en matériau plat et/ou est réalisé en tant que matériau plat.

9. Élément de filtre selon l'une quelconque des revendications 1 à 8,
**caractérisé en ce**
- **que** l'élément de filtre (20) présente au moins deux éléments de stabilisation de matériau de filtration (48) de sorte que
- la section de conduite d'écoulement (56) d'au moins un des éléments de stabilisation de matériau de filtration (48) fait saillie du côté sortie côté pur (42) de l'élément de filtre (20) et que
- la section de conduite d'écoulement (56) d'au moins un autre des éléments de stabilisation de matériau de filtration (48) fait saillie du côté entrée côté brut (40) de l'élément de filtre (20).

10. Élément de filtre selon la revendication 9,
**caractérisé en ce**
**que** les éléments de stabilisation de matériau de filtration (48) font saillie respectivement exclusivement soit du côté sortie côté pur (42) soit du côté entrée côté brut (40).

11. Filtre avec un élément de filtre (20) selon l'une quelconque des revendications 1 à 10,
**caractérisé en ce**
- **que** le filtre (10) comprend un boîtier (12), qui présente une partie côté brut (24) et une partie côté pur (22),
- **qu'**une ouverture d'entrée (14) est agencée dans la partie côté brut (24) du boîtier (12), par laquelle un fluide non filtré (18) peut entrer dans le boîtier (12), et
- **qu'**une ouverture de sortie (16) est agencée dans la partie côté pur (22) du boîtier (12), par laquelle un fluide filtré (18) peut sortir du boîtier (12).

12. Filtre selon la revendication 11,
**caractérisé en ce**
- **que** l'ouverture d'entrée (14) et l'ouverture de sortie (16) sont agencées transversalement l'un par rapport à l'autre,
- **que** le fluide (18) s'écoulant à travers le filtre (10) est dévié au moins en partie par la section de conduite d'écoulement (56) de l'au moins un élément de stabilisation de matériau de filtration (48).

13. Filtre selon la revendication 11 ou 12,
**caractérisé en ce**
**que** le filtre (10) est un filtre à air, en particulier un filtre à air pour un moteur à combustion interne, par exemple d'un véhicule automobile.
